# EUROPÄISCHE PATENTSCHRIFT

(11) **EP 0 256 313 B1**
(45) Veröffentlichungstag und Bekanntmachung des Hinweises auf die Patenterteilung: **24.03.1993**
(21) Anmeldenummer: 87110210.9
(22) Anmeldetag: 15.07.1987
(51) Int. Cl.: B60H 1/00, F24F 7/02

(54) **Einrichtung zum Belüften von Räumen in Fahrzeugen**
Device for ventilating vehicle compartments
Dispositif d'aération de compartiments de véhicule

(30) Priorität: 20.08.1986 DE 3628272; 19.12.1986 DE 3643436
(43) Veröffentlichungstag der Anmeldung: 24.02.1988
(73) Patentinhaber: ROBERT BOSCH GMBH, 70442 Stuttgart (DE)
(72) Erfinder: Amrhein, Wilhelm, Ing.(grad.), D-7147 Eberdingen 3 (DE); Scharf, Friedrich, Dr. Dipl.-Phys., D-7000 Stuttgart 40 (DE); Bauer, Wolfgang Otto, D-7250 Leonberg 1 (DE)

(56) Entgegenhaltungen:
- DE-A- 2 952 080
- DE-A- 3 329 666
- DE-A- 3 540 546
- FR-A- 2 543 664
- US-A- 3 059 562
- US-A- 4 558 634
- PATENT ABSTRACTS OF JAPAN, Band 3. Nr. 16 (M-48)[89], 10. Februar 1979, Seite 89 M 48; & JP-A-53 140 731 (NIPPON JIDOSHA BUHIN SOGO KENKYUSHO K.K.) 12-08-1978
- AUTOMOTIVE ENGINEERING, Band 93, Nr. 7, Juli 1985, Seiten 65,66, Warrendale, Pennsylvania, US; D. SCOTT et al.: "Solar energy ventilates experimental car"
- PATENT ABSTRACTS OF JAPAN, Band 10, Nr. 326 (M-532)[2382], 6. November 1986; & JP-A-61 132 408 (FUJI HEAVY IND LTD) 19-06-1986
- PATENT ABSTRACTS OF JAPAN, Band 7, Nr. 159 (M-228)[1304], 13. Juli 1983; & JP-A-58 67 511 (NIPPON DENSO K.K.) 22-04-1983
- IDEM

## Beschreibung

### Stand der Technik

Die Erfindung geht aus von einer Einrichtung zum Belüften von Fahrgasträumen in Kraftfahrzeugen nach der Gattung des Hauptanspruchs, wie Sie zum Beispiel aus der JP-A 61 13 24 08 bekanntgeworden ist. Diese Druckschrift zeigt das Dach eines Kraftfahrzeuges mit darin eingesetztem Glas-Sonnendach, welches zweischalig ausgebildet ist, auf der Innenseite der oberen Schale Solarzellen trägt und in einer Öffnung der unteren Schale einen von den Solarzellen gespeisten Axiallüfter aufweist, der Luft aus dem Fahrgastraum absaugt und über eine Öffnung an der Rückseite des Sonnendachs ins Freie bläst. Eine derartige Anordnung hat den Nachteil, daß die angesaugte Frischluft über die normalen Frischluftzuführungen, zum Beispiel vor der Windschutzscheibe des Fahrzeuges, ins Fahrzeuginnere gelangt und hierdurch eine erhebliche Aufheizung bei hohen Außentemperaturen erfährt.

Aus der JP-A 60-53 423 ist eine Belüftungseinrichtung für eine Kraftfahrzeugkabine bekannt, welche eine rasche Entlüftung des Fahrgastraumes nach dem Starten erlauben soll. Hierzu ist am hinteren Dachende in einer Ausnehmung der Karosserie ein Querstromgebläse angeordnet, welches von Solarzellen auf dem Fahrzeugdach gespeist wird und die Luft im Fahrzeugraum entlang des Fahrzeugdaches ansaugt und durch eine Öffnung an der Heckscheibe ins Freie bläst. Eine derartige Anordnung ist aufwendig und nur mit erheblichem zusätzlichen Aufwand im Fahrzeug unterzubringen. Ein nachträglicher Einbau ist zumindest mit erheblichen Karosseriearbeiten verbunden.

### Vorteile der Erfindung

Die erfindungsgemäße Anordnung mit den kennzeichnenden Merkmalen des Hauptanspruches hat dem Vorteil, daß zusätzliche Teile zur Bildung des Tragelementes für den Lüfter und den Solarmodul nicht erforderlich sind. Durch die Ansaugung von Frischluft unmittelbar am Fahrzeugdach gelangt die Frischluft ohne Aufheizung in den normalen Belüftungskanälen des Fahrzeuges in den Fahrgastraum und sorgt dort für eine angenehme und kühle Frischluftatmosphäre. Die Verwendung eines Tangential- oder Querstromgebläses erlaubt den Transport hoher Frischluftmengen bei niedrigem Geräuschpegel, ohne daß bei der erfindungsgemäßen Anordnung ein ins Gewicht fallender baulicher Mehraufwand erforderlich wäre.

Bei einer Einrichtung zur solarbetriebenen Belüftung des Fahrgastraumes eines Kraftfahrzeuges kann als Tragelement für den Lüfter und das Solarmodul vorteilhaft ein Schiebedach oder ein Sonnendach dienen. Besonders zweckmaßig erscheint die Anordnung des Erfindungsgedankens bei für den nachgräglichen Einbau auf dem Markt bereits erhältlichen Sonnendächern. Bei einem bereits eingebauten Sonnendach braucht gegebenenfalls nur die Glasscheibe gegen eine erfindungsgemäß mit einem Solarmodul und einem Lüfter kombinierte Scheibe ausgetauscht zu werden.

Durch die in den Unteransprüchen enthaltenen Merkmale sind vorteilhafte Weiterbildungen der Anordnung gemäß Hauptanspruch möglich. So hat es sich als zweckmäßig erwiesen, wenn die Ausblasöffnung des Lüfters unmittelbar in den zu belüftenden Raum einmündet, weil hierdurch einerseits eine Erwärmung der eingeblasenen Luft an erwärmten Fahrzeugeinbauten verhindert und andererseits ein die Förderleistung reduzierender Staudruck vermieden wird.

Bei Verwendung des Sonnendaches als Tragelement für die Belüftungseinrichtung kann die Glasscheibe des Sonnendaches vorteilhaft als Fluoreszenzkollektor ausgebildet sein.

Bei einer weiteren bevorzugten Ausführung ist der Lüfter im Inneren eines Windabweisers untergebracht, der ebenfalls als Zubehörteil am Markt erhältlich ist und im Zusammenhang mit einem Schiebedach auch eine natürliche Belüftung des Fahrzeuges während der Fahrt ermöglicht. Für das Solarmodul steht auch in diesem Fall eine genügend große Fläche auf der Außenhaut des Windabweisers zur Verfügung.

In weiterer Ausgestaltung der Erfindung wird vorgeschlagen, der Druckseite des Lüfters mindestens ein Strömungsleitelement zum gezielten Richten des Blasluftstroms in bestimmte Raumbereiche und/oder auf bestimmte Teile, wie Lenkrad, Armaturenbrett, nachzuschalten. Das Strömungsleitelement kann beispielsweise eine verstellbare Frischluftdüse üblicher Bauart oder eine verstellbare Jalousie sein.

### Zeichnung

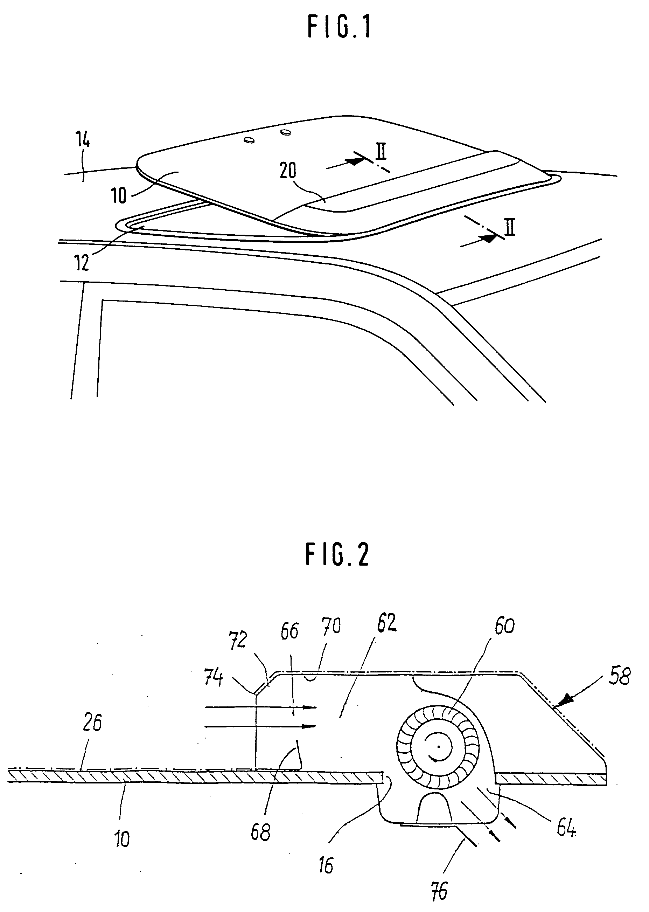

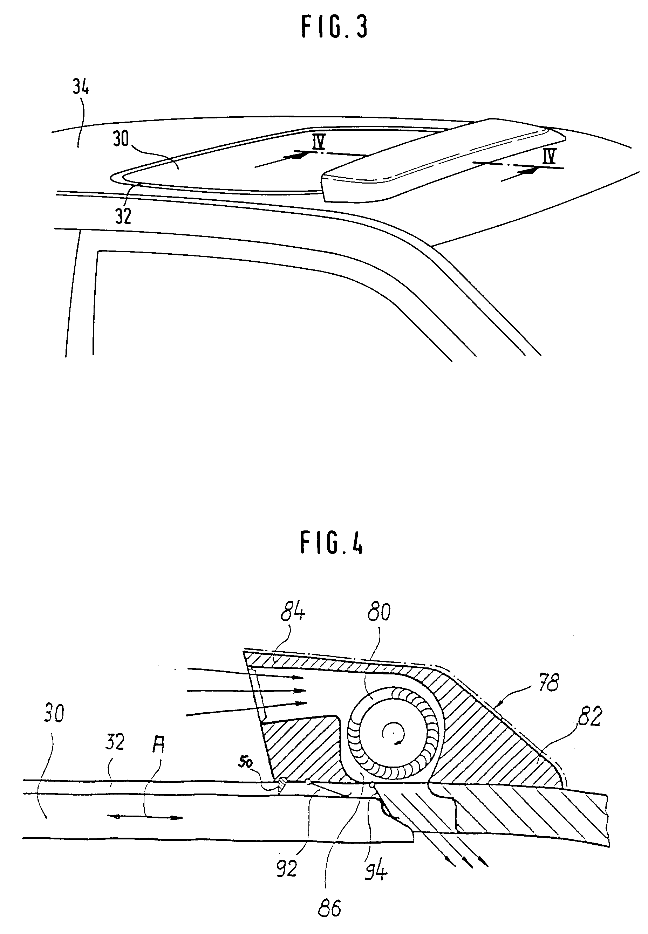

Zwei Ausführungsbeispiele der Erfindung sind in der Zeichnung dargestellt und in der nachfolgenden Beschreibung näher erläutert. Es zeigen Figur 1 als erstes Ausführungseispiel in perspektivischer Darstellung eine Dachpartie eines Kraftfahrzeuges mit einem ausstellbaren Sonnendach, Figur 2 einen Schnitt nach der Linie II-II in Figur 1, Figur 3 als zweites Ausführungsbeispiel in Perspektive eine Dachpartie eines Kraftfahrzeuges mit einem Schiebedach und Figur 4 einen Schnitt nach der Linie IV-IV in Figur 3.

### Beschreibung der Auführungsbeispiele

Das Kraftfahrzeug nach Figur 1 hat ein Sonnendach 10, welches eine Öffnung 12 im Fahrzeugdach 14 überdeckt und aus der Schließstellung bis in die dargestellte Schrägstellung klappbar ist. Das Sonnendach 10 selbst hat eine Öffnung 16 (Figur 2), die sich über einen wesentlichen Teil der Breite des Sonnendaches 10 erstreckt. Der Rand der Öffnung 16 wird beidseitig umgriffen und/oder überdeckt von einem angespritzten oder auf andere Weise hergestellten und befestigten Gehäuse 58, in welches ein Querstromgebläse 60 eingebaut ist. Dieses fördert in Richtung des Fahrgastraumes und ist zu diesem Zweck mit einem über der Sonnendachebene liegenden Ansaugstutzen 62 und innenraumseitig mit einer Ausblasöffnung 64 versehen.

Der Ansaugstutzen 62 ist dem Fahrzeugheck zugekehrt und hat eine Ansaugöffnung 66, die am unteren Rand von einer über die Dachebene vorstehenden Wasserabweiskante 68 begrentzt ist. Der den oberen Rand der Ansaugöffnung 66 begrenzende Wandabschnitt 70 des Lüftergehäuses 58 hat einen schräg zur Dachebene geneigten Ansatz 72, an der eine Wasserabreißkante 74 gebildet ist. An der Ausblasöffnung 64 ist ein Leitblech 76 vorgesehen, welches den Blasluftstrom gegen das Lenkrad bzw. das Armaturenbrett des Fahrzeuges richtet.

Die Einrichtung nach Figur 2 hat den Vorteil, daß die vom Querstromgebläse 60 geförderte Luft vor dem Eintritt in das Fahrzeuginnere keine anderen Räume oder Kanäle in der Fahrzeugkarosserie durchströmt, wo sie u.U. weiter aufgeheizt werden könnte. Die eingeblasene Luft wird außerdem gezielt auf Teile bzw. Raumbereiche gelenkt` die sich bei Sonneneinstrahlung besonders stark erwärmen, so daß sich ein guter Wirkungsgrad der Einrichtung ergibt. An einem Längsende des Querstromgebläses 20 ist ein in der Zeichnung nicht sichtbarer Elektromotor angeordnet, der von einem in Figur 2 durch eine strichpunktierte Linie angedeuteten Solarmodul 26 gespeist ist, welcher auf der Außenhaut des Gehäuses 18 und der Scheibe des Sonnendachs 10 angebracht ist. Auf dem Sonnendach 10 kann das Solarmodul 26 so angebracht sein, daß eine ausreichende Sonneneinstrahlung in den Fahrgastraum gewährleistet ist. Die lichtdurchlässige Scheibe des Sonnendaches 10 kann vorteilhaft als Fluoreszenzkollektor ausgeführt sein, dessen Randbereiche vom Solarmodul überzogen sind. Da der Fluoreszenzkollektor selbst lichtdurchlässig ist, gelangt durch ihn eine ausreichende Lichtmenge in den Fahrgastraum. Am Gehäuse 58 kann zweckmäßig ein nicht dargstellter Schalter zum unterbrechen der elektrischen Verbindung zwischen dem Solarmodul 26 und dem Elektromotor des Querstromgebläses 60 vorgesehen sein.

Ist das Sonnendach geschlossen, so wird bei Sonneneinstrahlung und geschlossenem Schalter das Querstromgebläse 60 durch die elektrische Leistung des Solarmoduls 26 angetrieben. Dadurch wird gemäß den Pfeilen in Figur 2 Frischluft angesaugt und in den Fahrgastraum befördert. Auf diese Weise wird die Temperatur im Fahrzeug auch bei längerer Parkdauer und starker Sonneneinstrahlung in erträglichen Grenzen gehalten.

Beim Ausführungsbeispiel nach den Figuren 3 und 4 hat das Kraftfahrzeug ein Stahlschiebedach 30, welches eine Öffnung 32 im Fahrzeugdach 34 verschließt und zum Freigeben der Öffnung in Richtung des Doppelpfeiles A in Figur 4 verschiebbar geführt ist. Der der Frontscheibe des Fahrzeuges zugekehrte Bereich der Öffnung 32 ist überdeckt von einem Windabweiser 78, in dessen gehäuseförmigem Grundkörper 82 ein elektrisch angetrtiebenes Querstromgebläse 80 integriert ist. Dieses hat einen mit dem vorderen Bereich der Öffnung 32 korrespondierenden Ausblaskanal und einen über der Dachebene liegenden Ansaugkanal. Der Spalt zwischen Grundkörper 82 und Stahlschiebedach 30 ist durch eine Dichtlippe 50 abgedeckt, welche am Grundkörper 82 befestigt ist und auch das Eindringen von Regen und Schnee verhindert.

Das Querstromgebläse 80 hat einen in der Zeichnung nicht sichtbaren elektrischen Antriebsmotor, der von einem in Figur 4 durch eine strichpunktierte Linie angdeuteten Solarmodul gespeist ist, welches die Außenhaut des Windabweisers 78 überdeckt. Diese Ausführung hat gegenüber jener nach den Figuren 1 und 2 den Vorteil, daß zum Absperren des das Querstromgebläse 80 durchsetzenden Luftweges keine zusätzlichen Mittel notwendig sind, weil das völlig geschlossene Stahlschiebedach 30 diesen Luftweg selbst dicht verschließt. In der dargestellten Park-Belüftungsstellung kann auch eine elektrische oder mechanische Arretierung für das Stahlschiebedach 30 vorgesehen sein. Die bisherigen Funktionen des Stahlschiebedachs bleiben auch durch den Anbau eines Windabweisers mit integriertem Lüftungsmodul (Lüfter plus Solarmodul) voll erhalten.

Das Querstromgebläse 80 saugt wie beim Ausfürhungsbeispiel nach Figur 2 die Außenluft direkt aus der Umgebung an und bläst sie gezielt gegen das Armaturenbrett des Fahrzeugs. Der Windabweister 78 hat einen gehäuseförmigen Grundkörper 82, welcher einen kurzen Ansaugstutzen 84 bildet und mit einer Ausblasöffnung 86 versehen ist, die über der vom Stahlschiebedach 30 abgedeckten Öffnung 32 im Fahrzeugdach liegt. In der Ausblasöffnung 86 und gegebenenfalls an dem entsprechend ausgebildeten vorderen Stirnrand des Stahlschiebedaches 30 wird der Blasluftstrom in die gewünschte Richtung gelenkt.

Am Grundkörper 82 des Windabweisers 78 sind ferner zwei nur schematisch dargestellte Schalter 92, 94 vorgesehen, die durch das Schiebedach 30 betätigt werden. Die Schalter 92, 94 überwachen die Stromzufuhr vom Solarmodul zum Lüfter 80 so, daß der Lüfter 80 nur in der dargestellten, einer definierten Öffnung entsprechenden Parkstellung des Schiebedachs 30 arbeitet. Die gleiche Schalteranordnung könnte auch beim Ausführungsbeispiel nach den Figuren 1 und 2 vorgesehen werden.

Die Baueinheit Windabweiser-Lüftungsmodul kann als Zubehörteil ohne Spezialkenntnisse vom Verbraucher installiert werden, wobei keine Veränderungen am Fahrzeug vorgenommen werden müssen. Eine Verkabelung mit anderen elektrischen Bauteilen des Fahrzeugs entfällt.

## Patentansprüche

1. Einrichtung zum Belüften von Fahrgasträumen in Kraftfahrzeugen, mit einem eine Dachöffnung des Fahrzeugs überdeckenden Tragelement, welches einen Lüfter mit einem elektrischen Antriebsmotor und an seiner Außenseite ein aus einer Vielzahl von Solarzellen bestehendes Solarmodul trägt, welches den Antriebsmotor des Lüfters mit elektrischer Energie versorgt, wobei das Tragelement (10, 40) für den Lüfter (20, 42) und das Solarmodul (26, 52) ein auch einem anderen Zweck dienendes Funktionsteil des Fahrzeugs, vorzugsweise das Schiebedach und/oder Sonnendach eines Fahrzeugs ist, dadurch gekennzeichnet, daß der Lüfter (20, 42) als Tangential- bzw. Querstromgebläse ausgebildet ist, daß der Lüfter (60, 80) in ein an der Fahrzeug-Dachöffnung (12, 32) angeordnetes, sich quer zur Fahrzeuglängsachse erstreckendes Lüftergehäuse (58, 82) eingebaut ist, dessen Luft-Ansaugöffnung oder Ansaugstutzen (62, 84) über der Dachebene liegt und dem Fahrzeugheck zugekehrt ist, während die Ausblasöffnung (64, 86) des Lüfters (60, 80) dem zu beküftenden Raum zugekehrt ist.

2. Einrichtung nach Anspruch 1, dadurch gekennzeichnet, daß die Ausblasöffnung (64, 86) des Lüfters (60, 80) unmittelbar in den zu belüftenden Raum einmündet.

3. Einrichtung nach Anspruch 1 oder 2, dadurch gekennzeichnet, daß der Ausblasöffnung (64, 86) des Lüftergehäuses (58, 82) mindestens ein Strömungsleitelement (76) zum gezielten Richten des Blasluftstromes in bestimmte Raumbereiche und/oder auf bestimmte Teile, wie Lenkrad, Armaturenbrett, nachgeschaltet ist.

4. Einrichtung nach einem der vorhergehenden Ansprüche, dadurch gekennzeichnet, daß die Ansaugöffnung (66) des Lüftergehäuses (58) am unteren Rand durch eine über die Dachebene vorstehende, vorzugsweise am Lüftergehäuse selbst gebildete Wasserabweiskante (68) begrenzt ist.

5. Einrichtung nach einem der vorhergehenden Ansprüche, dadurch gekennzeichnet, daß der die Ansaugöffnung (66) am oberen Rand begrenzende Wandabschnitt (70) des Lüftergehäuses (58) einen schräg zur Dachebene hin geneigten Ansatz (72) hat, an welchem eine Wasserabweiskante (74) gebildet ist.

6. Einrichtung nach einem der vorhergehenden Ansprüche, gekennzeichnet durch einen Schalter zum Unterbrechen der Stromzufuhr vom Solarmodul (58 78) zum Lüfter (60, 80) während der Fahrt.

7. Einrichtung nach Anspruch 6, für Fahrzeuge mit einem Schiebedach, gekennzeichnet durch vorzugsweise vom Schiebedach (30) betätigte Schalter (92, 94) zum Unterbrechen der Stromzufuhr vom Solarmodul zum Lüfter außerhalb der einer definierten Öffnung entsprechenden Parkstellung des Schiebedachs (30).

8. Einrichtung nach einem der vorhergehenden Ansprüche, dadurch gekennzeichnet, daß das Sonnendach (10) als Fluoreszenzkollektor ausgebildet ist.

9. Einrichtung nach Anspruch 1, dadurch gekennzeichnet, daß ein am Dach (34) des Fahrzeugs anzubringender bzw. angebrachter Windabweiser (38) als Tragelement für den Lüfter (42) und das Solarmodul (52) dient.

## Claims

1. Device for ventilating passenger compartments in motor vehicles, having a support element which covers a roof opening in the vehicle and carries a fan, which has an electric drive motor, and on its outside a solar module which consists of a multiplicity of solar cells and supplies the drive motor of the fan with electrical energy, the support element (10, 40) for the fan (20, 42) and the solar module (26, 52) being a functional part of the vehicle which also serves another purpose, preferably the sliding roof and/or sunroof of a vehicle, characterised in that the fan (20, 42) is constructed as a tangential flow or cross-flow fan, and in that the fan (60, 80) is installed in a fan housing (58, 82), which is arranged on the vehicle roof opening (12, 32) and extends at right angles to the vehicle longitudinal axis, and whose air suction opening or suction connection (62, 84) is located above the plane of the roof and faces the vehicle rear, while the blow-out opening (64, 86) of the fan (60, 80) faces the space to be ventilated.

2. Device according to Claim 1, characterised in that the blow-out opening (64, 86) of the fan (60, 80) opens directly into the space to be ventilated.

3. Device according to Claim 1 or 2, characterised in that there is connected downstream of the blow-out opening (64, 86) of the fan housing (58, 82) at least one flow guidance element (76) for pin-pointed direction of the blowing air stream into specific spatial areas and/or onto specific parts, such as steering wheel, dashboard.

4. Device according to one of the preceding claims, characterised in that the suction opening (66) of the fan housing (58) is bounded on the lower rim by a water-deflecting edge (68) which projects above the plane of the roof and is preferably formed on the fan housing itself.

5. Device according to one of the preceding claims, characterised in that the wall section (70), bounding the suction opening (66) on the upper rim, of the fan housing (58) has a shoulder (72) which is inclined obliquely relative to the plane of the roof and on which a water-deflecting edge (74) is formed.

6. Device according to one of the preceding claims, characterised by a switch for interrupting the power supply from the solar module (58, 78) to the fan (60, 80) during the driving.

7. Device according to Claim 6, for vehicles having a sliding roof, characterised by switches (92, 94), preferably operated by the sliding roof (30), for interrupting the power supply from the solar module to the fan outside the parking position of the sliding roof (30) corresponding to a defined opening.

8. Device according to one of the preceding claims, characterised in that the sunroof (10) is constructed as a fluorescence collector.

9. Device according to Claim 1, characterised in that a wind deflector (38), which is to be or has been mounted on the roof (34) of the vehicle, serves as support element for the fan (42) and the solar module (52).

## Revendications

1. Dispositif d'aération de l'intérieur de véhicules à moteur, avec un élément support recouvrant une ouverture dans le toit du véhicule, élément qui porte un ventilateur avec un moteur d'entraînement électrique et sur son côté extérieur un module solaire composé d'un grande nombre de cellules solaires, module qui alimente le moteur d'entraînement du ventilateur en énergie électrique, l'élément support (10, 40) pour le ventilateur (20, 42) et le module solaire (26, 52) étant une partie fonctionnelle du véhicule servant aussi à un autre but, de préférence le toit ouvrant et/ou le toit solaire, dispositif caractérisé en ce que le ventilateur (20, 42) est constitué comme une soufflante tangentielle ou à courant transversal, en ce que le ventilateur (60, 80) est monté dans un carter (58, 82) disposé sur l'ouverture du toit du véhicule (12, 32), s'étendant perpendiculairement à l'axe longitudinal du véhicule, carter dont l'ouverture d'aspiration d'air ou l'ajutage d'aspiration (62, 84) se trouve au-dessus du plan du toit et est tourné vers l'arrière du véhicule, tandis que l'ouverture de refoulement (64, 80) du ventilateur (60, 80) est tournée vers l'intérieur du véhicule à ventiler.

2. Dispositif selon la revendication 1, caractérisée en ce que l'ouverture de refoulement (64, 86) du ventilateur (60, 80) débouche directement dans l'espace à ventiler.

3. Dispositif selon la revendication 1 ou 2, caractérisé en ce qu'au moins un élément de guidage du flux (76) est monté en aval de l'ouverture de refoulement (64, 86) du carter du ventilateur (58, 82) pour diriger de façon appropriée le flux d'air pulsé dans des zones déterminées et/ou sur des parties déterminées, telles que le volant, le tableau de bord.

4. Dispositif selon l'une des revendications précédentes, caractérisé en ce que l'ouverture d'aspiration (66) du carter du ventilateur (58) est limitée sur le bord inférieur par un rebord qui repousse l'eau (68), faisant saillie au-dessus du plan du toit, formé de préférence sur le carter même du ventilateur.

5. Dispositif selon l'une des revendication précédentes caractérisé en ce que la section de paroi (70) du carter de ventilateur (58) limitant l'ouverture d'aspiration (66) sur le bord supérieur a un appendice (72) incliné obliquement vers le plan du toit, appendice sur lequel est formé un rebord (74) repoussant l'eau.

6. Dispositif selon l'une des revendications précédentes, caractérisé par un interrupteur pour couper l'alimentation en courant du module solaire (58, 78) vers le ventilateur (60, 80) pendant la marche.

7. Dispositif selon la revendication 6, pour des véhicules avec un toit ouvrant, caractérisé par des interrupteurs (92, 94) actionnés de préférence par le toit ouvrant (30) pour couper l'alimentation en courant par le module solaire du ventilateur en dehors de l'arrêt fixe du toit ouvrant (30) correspondant à une ouverture définie.

8. Dispositif selon l'une des revendication précédentes, caractérisé en ce que le toit solaire (10) est constitué comme un collecteur fluorescent.

9. Dispositif selon la revendication 1, caractérisé en ce qu'un déflecteur (38) à monter ou monté sur le toit (34) du véhicule sert d'élément support pour le ventilateur (42) et le module solaire (52).
